# EUROPEAN PATENT APPLICATION

(11) **EP 3 885 419 A1**
(43) Date of publication of application: **29.09.2021**
(21) Application number: 20164994.4
(22) Date of filing: 23.03.2020
(51) Int. Cl.: C09J 133/02, C09J 133/06

(54) **PRESSURE SENSITIVE ADHESIVE HAVING LOW VOC CHARACTERISTICS**

(71) Applicant: 3M Innovative Properties Company, Saint Paul, MN 55133-3427 (US)
(72) Inventor: Bieber, Pierre Reinhard, 40221 Düssseldorf (DE); Konietzny, Roman, 41453 Neuss (DE); Boehme, Achim, 41453 Neuss (DE); D'Hollander, Stijn, 2070 Zwijndrecht (BE)
(74) Representative: Mathys & Squire

(57) **Abstract**

The present disclosure relates to a precursor composition of a pressure sensitive adhesive comprising:
a) a (co)polymeric base component having a weight-average molecular weight (M_{w}) no greater than 500.000 g/mol and comprising at least one reactive functional group (X); and
b) a multi-functional oligomeric branching compound comprising an oligomer backbone and having a weight-average molecular weight (M_{w}) greater than 250 g/mol, wherein the multi-functional oligomeric branching compound comprises at least two complementary reactive functional groups (Y) which are capable of chemically reacting with the at least one reactive functional group (X) of the (co)polymeric base component.

## Description

### Technical Field

The present disclosure relates generally to the field of adhesives, more specifically to the field of pressure sensitive adhesives (PSA). The present disclosure also relates to a process of manufacturing such pressure sensitive adhesives and assemblies, and to uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

With broadened use of pressure-sensitive adhesive tapes over the years, performance requirements have become more demanding. Shear holding capability, for example, which originally was intended for applications supporting modest loads at room temperature, has now increased substantially for many applications in terms of operating temperature and load. Indeed, many applications require pressure sensitive adhesives to support a load at elevated temperatures, typically in the range of from 70°C to 120°C, for which high cohesive strengths are required. Similarly, an increased need has arisen for pressure sensitive adhesives having improved and versatile adhesion characteristics; in particular with respect to peel forces and shear resistance on various types of difficult to adhere surfaces, such as in particular the so-called low surface energy (LSE) and medium surface energy (MSE) substrates.

In addition to increasing performance requirements with regard to pressure sensitive adhesives, volatile organic compounds (VOC) reduction regulations are becoming increasingly important in particular for various kind of interior applications (occupational hygiene and occupational safety) such as e.g. in the construction market or in the automotive or electronics industries. Known acrylate-based pressure sensitive adhesives typically contain notable amounts of low molecular weight organic residuals, such as un-reacted monomers arising from their polymerization process, polymerization initiator residuals, contaminations from raw materials or degradation products formed during the manufacturing process. These low molecular weight residuals qualifying as VOC may diffuse out of the adhesive tape and can be potentially harmful. Known acrylate-based pressure sensitive adhesives, if not crosslinked, also generally suffer from lack of cohesive strength and excessive tendency to flow. This aspect may render the application and processability of uncrosslinked acrylate-based pressure sensitive adhesives particularly problematic, especially when made by a hotmelt process.

The reduction of organic solvent usage in the manufacturing process of pressure sensitive adhesives has quickly emerged as one straightforward means to reduce the overall VOC levels. The use of specific scavengers for organic contaminants, as described in WO 01/44400 (Yang), is another alternative way to achieve reduced VOC levels. However, the solutions for reducing overall VOC levels known from the prior art are often associated with increased manufacturing complexity and production costs. Also, the overall VOC levels observed often do not fulfill the requirements for various kind of interior applications such as e.g. in the construction market or in the automotive or electronics industries. Another partial solution to reduce VOC levels is described in EP-A1-2832779 (Bieber et al.) which discloses foamed pressure sensitive adhesives obtained from rubber-based elastomeric material and selected additives.

### Summary

Without contesting the technical advantages associated with the pressure sensitive adhesives known in the art, there is still a need for a pressure sensitive adhesive composition providing reduced overall VOC levels whilst providing excellent and versatile adhesion characteristics, as well as excellent shear performance at elevated temperature. There is a further need for a robust and cost-effective process for manufacturing such pressure sensitive adhesive compositions.

According to one aspect, the present disclosure relates to a precursor composition of a pressure sensitive adhesive comprising:
a) a (co)polymeric base component having a weight-average molecular weight (M_{w}) no greater than 500.000 g/mol and comprising at least one reactive functional group (X); and
b) a multi-functional oligomeric branching compound comprising an oligomer backbone and having a weight-average molecular weight (M_{w}) greater than 250 g/mol, wherein the multi-functional oligomeric compound comprises at least two complementary reactive functional groups (Y) which are capable of chemically reacting with the at least one reactive functional group (X) of the (co)polymeric base component.

In another aspect, the present disclosure relates to a process of manufacturing a pressure sensitive adhesive, comprising the steps of:
a) providing a mixing apparatus comprising a reaction chamber;
b) providing a composition as described above;
c) incorporating and mixing the composition in the reaction chamber of the mixing apparatus thereby forming a free-radical curable precursor of a pressure sensitive adhesive;
d) optionally, subjecting the free-radical curable precursor of a pressure sensitive adhesive to a heating step;
e) optionally, subjecting the free-radical curable precursor of a pressure sensitive adhesive to a devolatilization step;
f) removing the free-radical curable precursor of a pressure sensitive adhesive from the mixing apparatus; and
g) curing the free-radical curable precursor of a pressure sensitive adhesive.

In still another aspect, the present disclosure relates to a pressure sensitive adhesive which is obtained by curing the precursor composition of a pressure sensitive adhesive as described above.

In yet another aspect of the present disclosure, it is provided a pressure sensitive adhesive assembly comprising a first pressure sensitive adhesive layer, wherein the first pressure sensitive adhesive layer comprises a pressure sensitive adhesive or a cured pressure sensitive adhesive as described above.

According to still another aspect, the present disclosure relates to the use of a precursor composition of a pressure sensitive or a pressure sensitive adhesive or a pressure sensitive adhesive assembly as described above for industrial applications.

### Detailed description

According to a first aspect, the present disclosure relates to a precursor composition of a pressure sensitive adhesive comprising:
a) a (co)polymeric base component having a weight-average molecular weight (M_{w}) no greater than 500.000 g/mol and comprising at least one reactive functional group (X); and
b) a multi-functional oligomeric branching compound comprising an oligomer backbone and having a weight-average molecular weight (M_{w}) greater than 250 g/mol, wherein the multi-functional oligomeric compound comprises at least two complementary reactive functional groups (Y) which are capable of chemically reacting with the at least one reactive functional group (X) of the (co)polymeric base component.

In the context of the present disclosure, it has surprisingly been found that a precursor composition of a pressure sensitive adhesive as described above allows producing pressure sensitive adhesives having reduced overall VOC levels whilst providing excellent and versatile adhesion characteristics, in particular with respect to peel forces on various types of difficult to adhere surfaces such as in particular low surface energy (LSE) substrates. The pressure sensitive adhesives produced from the precursor composition as described above are further characterized by outstanding shear performance at elevated temperatures such as e.g. 70°C.

The precursor composition of a pressure sensitive adhesive as described above is surprisingly provided with beneficial workability and processability properties such as e.g. advantageous pumpability, flowability, extrudability, applicability, and coatability characteristics, in particular under relatively mild processing conditions. Advantageously still, the precursor composition of a pressure sensitive adhesive as described above may be formed and processed under the so-called hotmelt processing conditions, without causing unwanted gelling reactions.

Those are particularly unexpected findings as (co)polymeric base component having a weight-average molecular weight (M_{w}) no greater than 500.000 g/mol and comprising at least one reactive functional group are generally recognized as leading to challenging or at least varying viscosity characteristics when used in combination with multi-functional oligomeric branching compounds comprising at least two complementary reactive functional groups which is capable of chemically reacting with the at least one reactive functional group of the (co)polymeric base component. These challenging viscosity characteristics would have been intuitively expected to detrimentally affect the workability and processability characteristics of the precursor.

Without wishing to be bound by theory, it is believed that these excellent characteristics and performance attributes are due in particular to the presence of a specific combination of: (a) the (co)polymeric base component having a weight-average molecular weight (M_{w}) no greater than 500.000 g/mol which may qualify as a relatively low molecular weight copolymer and which further comprises at least one reactive functional group (X); and (b) the multi-functional oligomeric branching compound comprising an oligomer backbone having a weight-average molecular weight (M_{w}) greater than 250 g/mol and at least two complementary reactive functional groups which are capable of chemically reacting with the at least one reactive functional group of the (co)polymeric base component.

In the context of the present disclosure, it has been surprisingly found that when the two above-mentioned reactive components are contacted under the suitable reaction conditions, a branched (co)polymeric base component is formed which has an increased molecular weight (M_{w}) when compared to the initial (co)polymeric base component, but which surprisingly keeps the excellent workability and processability properties of the precursor composition of a pressure sensitive adhesive as described above, in particular under the hotmelt processing conditions.

Still without wishing to be bound by theory, it is believed that it is precisely the formation of this branched (co)polymeric base component which leads to producing pressure sensitive adhesives characterized by outstanding shear performance and improved cohesion at elevated temperatures. It is further believed this branched (co)polymeric base component, which may formally be regarded as an intermediate (co)polymeric reaction product, also beneficially impact the overall low VOC characteristics of the ultimately produced pressure sensitive adhesives.

The pressure sensitive adhesives produced from the precursor composition as described above have surprisingly been found to provide not only improved shear performance and improved cohesion at elevated temperatures, but also reduced VOC levels, when compared to the initial (co)polymeric base component.

As such, the pressure sensitive adhesives produced from the precursor composition as described above are particularly suitable for interior applications, in particular for construction market applications and transportation market applications, and for electronic applications, in particular for the fixation of display panels in mobile handheld electronic devices.

In the context of the present disclosure, the term "multi-functional oligomeric branching compound" is meant to designate a compound comprising an oligomer backbone and which is capable of chemically reacting via covalent bond with at least one reactive functional group present in the backbone of (co)polymeric base component, thereby forming a side-chain or a branching in the backbone of (co)polymeric base component. In particular, the term "multi-functional oligomeric branching compound" is not meant to designate a compound capable of chemically reacting via covalent bond with at least one reactive functional group present at a terminal position of the (co)polymeric base component. In the context of the present disclosure, the terms "branching compound", "grafting compound" and "chain-extender compound" may be used interchangeably.

In the context of the present disclosure, the expression "free-radical curable precursor" is meant to designate a composition which can be cured using an initiator containing or able to produce a free-radical. Similarly, the expression "free-radical curable functional group" is meant to designate a functional group which can be cured using free-radicals. Free radicals can be produced by an initiator containing or able to produce a free-radical. The term "initiator" is meant to refer to a substance or a group of substances able to start or initiate or contribute to the curing process of the curable precursor. Alternatively, free radicals can be produced without the presence of an initiator by direct exposure to actinic radiation for instance electron beam or gamma radiation.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, polycarbonate (PC), polyvinylchloride (PVC), polyamide (PA), polyurethanes (PUR), thermoplastic elastomers (TPE), polyoxymethylene (POM), polystyrene (PS), poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described, for example, in ASTM D7490-08.

As used herein, the expression "hot melt processable polymeric composition" is meant to designate a polymer or a blended polymeric material with a melt viscosity profile such that it can be coated on a substrate or carrier in a thin layer at a process temperature significantly above normal room temperature. As used herein, the term "reactive extrusion" is meant to refer to polymer processing and polymerization reactions performed in an extrusion equipment.

(Co)polymeric base components for use herein are not particularly limited, as long as they have a weight-average molecular weight (M_{w}) no greater than 500.000 g/mol and comprise at least one reactive functional group (X) which is capable of chemically reacting with the at least two complementary reactive functional groups (Y) of the multi-functional oligomeric branching compound. Suitable (co)polymeric base components for use herein may be easily identified by those skilled in the art, in the light of the present disclosure. Unless otherwise indicated, the weight-average molecular weight (M_{w}) of the (co)polymeric base component for use herein is determined by conventional gel permeation chromatography (GPC) using appropriate techniques well known to those skilled in the art.

In one particular aspect of the disclosure, the at least one functional group (X) is selected from the group consisting of carboxylic acids, hydroxyls, amines, aziridines, azetidines, pyrrolidines, piperidines, carbodiimides, isocyanates, epoxides, acid anhydrides, amides, and any combinations or mixtures thereof.

In one preferred aspect, the at least one functional group (X) for use in the present disclosure is selected from the group consisting of carboxylic acids, hydroxyls, amines, and any combinations or mixtures thereof.

In a more preferred aspect, the at least one functional group (X) for use herein is selected from the group consisting of carboxylic acids, and any combinations or mixtures thereof.

According to one typical aspect of the disclosure, the complementary reactive functional groups (Y) for use herein are capable of chemically reacting with the at least one reactive functional group (X) of the (co)polymeric base component at a temperature of at least 5°C, at least 10°C, at least 15°C, at least 20°C, at least 30°C, at least 50°C, at least 80°C, at least 100°C, at least 120°C, at least 140°C, or even at least 150°C.

According to another typical aspect of the disclosure, the complementary reactive functional groups (Y) for use herein are capable of chemically reacting with the at least one reactive functional group (X) of the (co)polymeric base component at a temperature no greater than 180°C, no greater than 160°C, no greater than 150°C, no greater than 140°C, no greater than 130°C, no greater than 120°C, no greater than 110°C, no greater than 100°C, no greater than 90°C, or even no greater than 80°C.

According to still another typical aspect of the disclosure, the complementary reactive functional groups (Y) for use herein are capable of chemically reacting with the at least one reactive functional group (X) of the (co)polymeric base component at a temperature comprised in a range from 5 to 140°C, from 10 to 120°C, from 20 to 100°C, from 30 to 80°C, or even from 30 to 60°C.

According to yet another typical aspect of the disclosure, the complementary reactive functional groups (Y) for use herein are capable of chemically reacting with the at least one reactive functional group (X) of the (co)polymeric base component at a temperature comprised in a range from 5 to 140°C, from 10 to 120°C, from 20 to 100°C, from 30 to 80°C, or even from 30 to 60°C.

In one advantageous aspect, the complementary reactive functional groups (Y) for use in the disclosure are capable of chemically reacting with the at least one reactive functional group (X) of the (co)polymeric base component without any provision of (high-energy actinic) radiation, in particular any UV radiation, e-beam radiation or gamma radiation, more in particular UV-C radiation.

In another advantageous aspect, the composition of the present disclosure is curable, in particular free-radical curable, more in particular with the provision of (high-energy actinic) radiation, more in particular UV radiation, e-beam radiation or gamma radiation, more in particular UV-C radiation.

According to one preferred aspect of the disclosure, the complementary reactive functional groups (Y) for use herein are selected from the group consisting of carboxylic acids, hydroxyls, amines, aziridines, azetidines, pyrrolidines, piperidines, carbodiimides, isocyanates, epoxides, acid anhydrides, amides, and any combinations or mixtures thereof.

According to another preferred aspect of the disclosure, the complementary reactive functional groups (Y) for use herein are selected from the group consisting of aziridines, carbodiimides, isocyanates, epoxides, and any combinations or mixtures thereof.

According to a more preferred aspect of the disclosure, the complementary reactive functional groups (Y) are selected from the group consisting of aziridines, carbodiimides, and any combinations or mixtures thereof.

According to a particularly preferred aspect of the disclosure, the at least one functional group (X) for use herein is selected from the group consisting of carboxylic acids, and any combinations or mixtures thereof; and the complementary reactive functional groups (Y) for use herein are selected from the group consisting of aziridines, carbodiimides, and any combinations or mixtures thereof.

In one exemplary aspect, the (co)polymeric base component for use herein further comprises at least one free-radical curable functional group (Z), which is different from the at least one reactive functional group (X) and different from the complementary reactive functional groups (Y).

In a typical aspect of the disclosure, the free-radical curable functional group (Z) for use herein is not capable of chemically reacting with the at least one reactive functional group (X) of the (co)polymeric base component or the complementary reactive functional groups (Y) of the multi-functional oligomeric branching compound.

In another typical aspect of the disclosure, the free-radical curable functional group (Z) is not capable of chemically reacting with the at least one reactive functional group (X) of the (co)polymeric base component or the complementary reactive functional groups (Y) of the multi-functional oligomeric branching compound at a temperature of at least 5°C, at least 10°C, at least 15°C, at least 20°C, at least 30°C, at least 50°C, at least 80°C, at least 100°C, at least 120°C, at least 140°C, or even at least 150°C.

In still another typical aspect of the disclosure, the free-radical curable functional group (Z) is not capable of reacting with the at least one reactive functional group (X) of the (co)polymeric base component or the at least one reactive complementary functional groups (Y) of the multi-functional oligomeric branching compound even with the provision of (high-energy) radiation, in particular UV radiation, more in particular UV-C radiation.

According to an advantageous aspect, the free-radical curable functional group (Z) for use herein is selected from the group consisting of Norrish type (I) free-radical curable functional groups, Norrish type (II) free-radical crosslinkable functional groups, and any combinations or mixtures thereof.

According to a more advantageous aspect, the free-radical curable functional group (Z) is selected from the group consisting of Norrish type (II) free-radical curable functional groups, in particular from the group consisting of benzophenones, substituted benzophenones, benzyl formates, thioxanthones, and any combinations or mixtures thereof.

According to an even more advantageous aspect, the free-radical curable functional group (Z) is selected from the group consisting of Norrish type (II) free-radical curable functional groups, in particular from the group consisting of benzophenones, substituted benzophenones, and any combinations or mixtures thereof.

In one advantageous aspect, the (co)polymeric base component for use in the present disclosure has a weight-average molecular weight (M_{w}) no greater than 480.000 g/mol, no greater than 450.000 g/mol, no greater than 420.000 g/mol, no greater than 400.000 g/mol, no greater than 380.000 g/mol, no greater than 350.000 g/mol, no greater than 320.000 g/mol, no greater than 300.000 g/mol, no greater than 290.000 g/mol, no greater than 280.000 g/mol, no greater than 270.000 g/mol, no greater than 260.000 g/mol, or even no greater than 250.000 g/mol.

In another advantageous aspect, the (co)polymeric base component for use herein has a weight-average molecular weight (M_{w}) greater than 5.000 g/mol, greater than 10.000 g/mol, greater than 50.000 g/mol, greater than 80.000 g/mol, greater than 100.000 g/mol, greater than 120.000 g/mol, greater than 150.000 g/mol, greater than 180.000 g/mol, greater than 200.000 g/mol, or even greater than 220.000 g/mol.

More advantageously, the (co)polymeric base component for use herein has a weight-average molecular weight (M_{w}) comprised in a range from 6.000 to 480.000 g/mol, from 6.000 to 450.000 g/mol, from 6.000 to 420.000 g/mol, from 6.000 to 400.000 g/mol, from 6.000 to 380.000 g/mol, from 6.000 to 360.000 g/mol, from 6.000 to 340.000 g/mol, from 10.000 to 320.000 g/mol, from 30.000 to 300.000 g/mol, from 50.000 to 300.000 g/mol, from 80.000 to 300.000 g/mol, from 100.000 to 300.000 g/mol, from 100.000 to 300.000 g/mol, from 150.000 to 300.000 g/mol, from 200.000 to 300.000 g/mol, from 220.000 to 300.000 g/mol, from 220.000 to 280.000 g/mol, or even from 220.000 to 260.000 g/mol.

According to an advantageous aspect of the disclosure, the (co)polymeric base component for use herein is a hot melt processable polymeric composition.

According to a more advantageous aspect of the disclosure, the (co)polymeric base component is selected from the group consisting of thermoplastic materials, elastomeric materials, thermoplastic elastomer materials, thermoplastic non-elastomeric materials, and any combinations or mixtures thereof.

According to an even more advantageous aspect, the (co)polymeric base component for use herein is selected from the group consisting of polyacrylics, rubber-based elastomeric materials, rubber-based non-elastomeric materials, polycarbonates, polyacrylonitriles, polyvinyl chlorides, alkylene-vinyl acetate copolymers, alkylene-acrylic acid copolymers, polyurethanes, polyesters, polyamides, polyolefins, polyphenylene oxides, and any combinations or mixtures thereof.

According to another advantageous aspect, the (co)polymeric base component for use herein is selected from the group consisting of pressure sensitive adhesive compositions.

According to another advantageous aspect, the (co)polymeric base component for use herein is selected from the group consisting of (amorphous or semi-crystalline) thermoplastic materials, and any combinations or mixtures thereof.

According to a more advantageous aspect of the disclosure, the (co)polymeric base component for use herein is selected from the group consisting of rubber-based elastomeric materials, rubber-based non-elastomeric materials, polyacrylics, and any combinations or mixtures thereof.

In one particularly advantageous aspect, the (co)polymeric base component for use herein is selected from the group consisting of rubber-based (thermoplastic) elastomeric materials. More advantageously, the (co)polymeric base component for use herein is selected from the group consisting of olefinic block copolymers, acrylate block copolymers, styrenic block copolymers, styrene-isoprene-styrene block copolymers, styrene-butadienestyrene block copolymers, styrene-ethylene/butadiene-styrene block copolymers, styrene-ethylene/propylene-styrene block copolymers, styrene-butadiene random copolymers, polyisoprene polymers, polybutadiene polymers, halogenated butyl rubbers, and any combinations or mixtures thereof.

In another particularly advantageous aspect of the disclosure, the (co)polymeric base component for use herein comprises a (meth)acrylate-based (co)polymer component.

In one preferred aspect of the disclosure, the (meth)acrylate-based (co)polymer component for use herein comprises the (co)polymerization reaction product of a (co)polymerizable material comprising:
i. C₁-C₃₂ acrylic acid ester monomer units;
ii. ethylenically unsaturated monomer units having the reactive functional group (X) and which is copolymerizable with monomer units (i); and
iii. optionally, further ethylenically unsaturated monomer units which are copolymerizable with monomer units (i) and/or (ii) and which comprise the free-radical curable functional group (Z).

In one typical aspect of the disclosure, the C₁-C₃₂ (meth)acrylic acid ester monomer units (i) for use herein are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₄ (meth)acrylic acid ester monomer units.

In another typical aspect of the disclosure, the C₁-C₃₂ (meth)acrylic acid ester monomer units (i) for use herein are selected from the group of C₄-C₃₀ (meth)acrylic acid ester monomer units, C₄-C₁₄ (meth)acrylic acid ester monomer units, or even from the group of C₄-C₉ (meth)acrylic acid ester monomer units.

In one advantageous aspect, the C₁-C₃₂ (meth)acrylic acid ester monomer units (i) for use in the disclosure are selected from the group consisting of C₄-C₉ (meth)acrylic acid ester monomer units, preferably from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and any combinations or mixtures thereof.

In one more advantageous aspect, the C₁-C₃₂ (meth)acrylic acid ester monomer units (i) for use herein are selected from the group consisting of isooctyl acrylate, 2-ethylhexyl acrylate, and any combinations or mixtures thereof.

According to one exemplary aspect, the ethylenically unsaturated monomer units (ii) having the reactive functional group (X) for use herein are selected from the group consisting of acrylic acid, methacrylic acid, itaconic acid, maleic acid, fumaric acid, crotonic acid, aconitic acid, dimethylacrylic acid, beta-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and any combinations or mixtures thereof.

According to one advantageous aspect, the ethylenically unsaturated monomer units (ii) having the reactive functional group (X) for use herein are selected from the group consisting of (meth)acrylic acid monomers, in particular acrylic acid monomers, and any combinations or mixtures thereof.

According to an exemplary aspect, the optional further ethylenically unsaturated monomer units (iii) for use herein are selected from the group consisting of C₁-C₁₈ (meth)acrylic acid ester monomer units.

According to one advantageous aspect of the disclosure, the optional further ethylenically unsaturated monomer units (iii) for use herein are selected from the group consisting of C₁-C₁₈ methacrylic acid ester monomer units comprising a free-radical curable functional group (Z) selected from the group consisting of Norrish type (II) free-radical curable functional groups, in particular from the group consisting of benzophenones, substituted benzophenones, benzyl formates, thioxanthones, and any combinations or mixtures thereof.

According to a more advantageous aspect of the disclosure, the optional further ethylenically unsaturated monomer units (iii) are selected from the group consisting of C₁-C₁₈ methacrylic acid ester monomer units comprising a free-radical curable functional group (Z) selected from the group consisting of benzophenones, substituted benzophenones, and any combinations or mixtures thereof.

The (meth)acrylate-based (co)polymer component for use herein may be prepared by processes familiar to the skilled person, with particular advantage by conventional free-radical polymerizations or controlled radical polymerizations. A variety of conventional free radical polymerization methods, including solution, bulk (i.e., with little or no solvent), dispersion, emulsion, and suspension processes, which processes are familiar to the skilled person. The particular method used may be influenced by the use of the final pressure sensitive adhesive composition. The reaction product of the polymerizable materials can be random or block copolymers. The polyacrylates may be prepared by copolymerization of the monomeric components using the usual polymerization initiators and also, where appropriate, regulators (chain transfer agents), with polymerization taking place at the customary temperatures in bulk, in emulsion, such as in water or liquid hydrocarbons, for example, or in solution.

According to another advantageous aspect, the (meth)acrylate-based (co)polymer component for use herein comprises the essentially adiabatic (co)polymerization reaction product of the (co)polymerizable material. Essentially adiabatic polymerization methods using a batch reactor are described e.g. in U.S. Pat. No. 5,637,646 (Ellis).

Multi-functional oligomeric branching compounds for use herein are not particularly limited, as long as they meet the following three requirements: a) they comprise an oligomer backbone, b) they have a weight-average molecular weight (M_{w}) greater than 250 g/mol, and c) they comprise at least two complementary reactive functional groups (Y) which are capable of chemically reacting with the at least one reactive functional group (X) of the (co)polymeric base component. Suitable multi-functional oligomeric branching compounds for use herein may be easily identified by those skilled in the art, in the light of the present disclosure. Unless otherwise indicated, the weight-average molecular weight (M_{w}) of the multi-functional oligomeric branching compound for use herein is determined by conventional gel permeation chromatography (GPC) using appropriate techniques well known to those skilled in the art.

In one particular aspect of the disclosure, the multi-functional oligomeric branching compound for use herein has a weight-average molecular weight (M_{w}) greater than 300 g/mol, greater than 350 g/mol, greater than 400 g/mol, greater than 450 g/mol, greater than 500 g/mol, greater than 550 g/mol, greater than 600 g/mol, greater than 650 g/mol, greater than 700 g/mol, greater than 800 g/mol, greater than 1000 g/mol, greater than 2000 g/mol, greater than 3000 g/mol, greater than 4000 g/mol, greater than 5000 g/mol, or even greater than 6000 g/mol.

In another particular aspect of the disclosure, the multi-functional oligomeric branching compound for use herein has a weight-average molecular weight (M_{w}) no greater than 20.000 g/mol, no greater than 18.000 g/mol, no greater than 16.000 g/mol, no greater than 15.000 g/mol, no greater than 12.000 g/mol, no greater than 10.000 g/mol, no greater than 9500 g/mol, no greater than 9000 g/mol, no greater than 8500 g/mol, no greater than 8000 g/mol, no greater than 7500 g/mol, no greater than 7000 g/mol, no greater than 5500 g/mol, no greater than 6000 g/mol, no greater than 5000 g/mol, no greater than 4000 g/mol, no greater than 3000 g/mol, no greater than 2000 g/mol, or even no greater than 1000 g/mol.

In still another particular aspect of the disclosure, the multi-functional oligomeric branching compound for use herein has a weight-average molecular weight (M_{w}) comprised in a range from 280 to 50.000 g/mol, from 350 to 40.000 g/mol, from 400 to 30.000 g/mol, from 400 to 20.000 g/mol, from 450 to 15.000 g/mol, from 500 to 10.000 g/mol, from 500 to 8.000 g/mol, from 600 to 8.000 g/mol, or even from 600 to 6.000 g/mol.

In one advantageous aspect, the complementary reactive functional groups (Y) for use herein are located (at least) at each terminal position of the oligomer backbone.

In another advantageous aspect, the complementary reactive functional groups (Y) for use herein are distributed randomly along the oligomer backbone.

According to one typical aspect, the multi-functional oligomeric branching compound for use in the disclosure comprises a linear or branched oligomer backbone, in particular a linear oligomer backbone.

According to another typical aspect, the multi-functional oligomeric branching compound comprises a polar oligomer backbone.

According to an advantageous aspect, the multi-functional oligomeric branching compound for use herein comprises an oligomer backbone comprising in particular a polyether, a polyester, a polythioether, a polyacrylate, or any combinations or mixtures thereof.

According to a more advantageous aspect, the multi-functional oligomeric branching compound for use herein comprises an oligomer backbone comprising (or consisting of) a polyether.

In an even more advantageous aspect of the disclosure, the multi-functional oligomeric branching compound comprises at least one cyclic amine, at each terminal position of the oligomer backbone.

In still an even more advantageous aspect of the disclosure, the cyclic amine for use herein is selected from the group consisting of aziridines, azetidines, pyrrolidines, piperidines, and any combinations or mixtures thereof.

In a particularly advantageous aspect of the disclosure, the cyclic amine for use herein is selected from the group consisting of aziridines.

In still another particularly advantageous aspect of the disclosure, the multi-functional oligomeric branching compound for use herein is a bis-aziridino compound.

According to one preferred aspect, the multi-functional oligomeric branching compound for use in the present disclosure comprises an oligomer backbone comprising (or consisting of) a polyether and at least one aziridine functional group at each terminal position of the oligomer backbone, wherein the polyether oligomer backbone is obtained by copolymerization of propylene oxide units. Advantageously, the polyether oligomer backbone for use herein is obtained by copolymerization of tetrahydrofuran units, ethylene oxide units, and any combinations or mixtures thereof.

According to another preferred aspect, the multi-functional oligomeric branching compound for use in the present disclosure has the following formula: 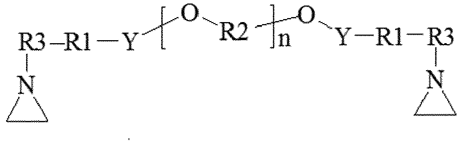 wherein:
R¹ is a covalent bond or an alkylene group;
each R² is independently selected from the group consisting of (linear) alkylene groups;
R³ is a straight chain or branched alkylene groups;
Y is a divalent linking group;
and n is an integer selected such that the average molecular weight of the multi-functional oligomeric branching (grafting) compound is greater than 250 g/mol.

According to still another preferred aspect, the multi-functional oligomeric branching compound for use in the present disclosure has the following formula: 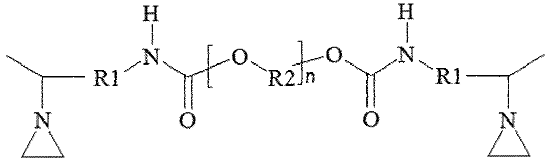 wherein:
R¹ is an alkylene group;
each R² is independently selected from the group consisting of (linear) alkylene groups having 2 to 6 carbon atoms; and
n is an integer selected such that the average molecular weight of the multi-functional oligomeric branching (grafting) compound is greater than 250 g/mol.

According to still another preferred aspect, the multi-functional oligomeric branching compound for use herein has the following formula: 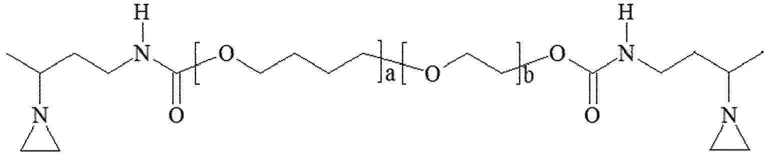 wherein a and b are integers greater than or equal to 1, and the sum of a and b is equal to n.

According to an alternatively preferred aspect, the multi-functional oligomeric branching compound for use in the present disclosure comprises at least one carbodiimide, at each terminal position of the oligomer backbone.

In a typical aspect, the precursor composition of a pressure sensitive adhesive according to the present disclosure comprises no greater than 10 pph, no greater than 8 pph, no greater than 6 pph, no greater than 5 pph, no greater than 4 pph, no greater than 3 pph, or even no greater than 2 pph of the multi-functional oligomeric branching compound, based on 100 parts of the (co)polymeric base component.

In another typical aspect, the composition of the present disclosure comprises the multi-functional oligomeric branching compound in an amount ranging from 0.1 to 10 pph, from 0.1 to 8 pph, from 0.2 to 8 pph, from 0.2 to 6 pph, from 0.3 to 6 pph, from 0.3 to 5 pph, from 0.5 to 5 pph, from 0.5 to 4 pph, from 0.6 to 4 pph, from 0.6 to 3 pph, from 0.7 to 3 pph, from 0.8 to 3 pph, or even from 0.8 to 2 pph, based on 100 parts of the (co)polymeric base component.

According to one particularly beneficial aspect, the composition of the present disclosure is substantially free of thermal crosslinking agents and thermal crosslinking accelerators.

According to another particularly beneficial aspect, the composition of the present disclosure has a Volatile Organic Compound (VOC) value of less than 1500 ppm, less than 1200 ppm, less than 1000 ppm, less than 800 ppm, less than 600 ppm, less than 500 ppm, less than 400 ppm, less than 300 ppm, less than 200 ppm, less than 150 ppm, less than 120 ppm, less than 100 ppm, less than 80 ppm, or even less than 60 ppm, when measured by thermal desorption analysis according to test method VDA278.

According to still another particularly beneficial aspect, the composition of the present disclosure has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, less than 400 ppm, less than 300 ppm, less than 200 ppm, less than 150 ppm, less than 120 ppm, or even less than 100 ppm, when measured by thermal desorption analysis according to test method VDA278.

In another aspect, the present disclosure relates to a process of manufacturing a pressure sensitive adhesive, comprising the steps of:
a) providing a mixing apparatus comprising a reaction chamber;
b) providing a composition as described above;
c) incorporating and mixing the composition in the reaction chamber of the mixing apparatus thereby forming a free-radical curable precursor of a pressure sensitive adhesive;
d) optionally, subjecting the free-radical curable precursor of a pressure sensitive adhesive to a heating step;
e) optionally, subjecting the free-radical curable precursor of a pressure sensitive adhesive to a devolatilization step;
f) removing the free-radical curable precursor of a pressure sensitive adhesive from the mixing apparatus; and
g) curing the free-radical curable precursor of a pressure sensitive adhesive.

According to one advantageous aspect of the disclosure, the (co)polymeric base component for use herein is a hot melt processable polymeric composition, and the mixing apparatus is, in particular, a hot melt mixing apparatus.

According to a typical aspect of the process, the step of mixing the composition in the reaction chamber of the mixing apparatus enables the complementary reactive functional groups (Y) to chemically react with the at least one reactive functional group (X) of the (co)polymeric base component.

In an advantageous aspect of the disclosure, the chemical reaction between the complementary reactive functional groups (Y) and the at least one reactive functional group (X) of the (co)polymeric base component is performed by reactive extrusion. In the context of the present disclosure, it has been surprisingly discovered that reactive extrusion is a particularly advantageous technique not only to provide efficient and fast chemical reaction between the complementary reactive functional groups (Y) of the multi-functional oligomeric branching compound and the at least one reactive functional group (X) of the (co)polymeric base component, but also to ensure advantageous processing and post-processing steps of the resulting reaction product.

In a typical aspect, the chemical reaction between the complementary reactive functional groups (Y) and the at least one reactive functional group (X) of the (co)polymeric base component is performed at a temperature no greater than 180°C, no greater than 160°C, no greater than 150°C, no greater than 140°C, no greater than 130°C, no greater than 120°C, no greater than 110°C, no greater than 100°C, no greater than 90°C, or even no greater than 80°C.

In another typical aspect, the chemical reaction between the complementary reactive functional groups (Y) and the at least one reactive functional group (X) of the (co)polymeric base component is performed at a temperature comprised in a range from 5 to 140°C, from 10 to 120°C, from 20 to 100°C, from 30 to 80°C, or even from 30 to 60°C.

Mixing apparatus for use herein are not particularly limited. Any mixing apparatus comprising a reaction chamber and commonly known in the art may be used in the context of the present disclosure. Suitable mixing apparatus for use herein may be easily identified by those skilled in the art in the light of the present disclosure.

According to one advantageous aspect of the disclosure, the mixing apparatus for use herein is selected from the group of single- and multi-screw extruders, static- and dynamic-mixers, and any combinations thereof.

According to a more advantageous aspect of the disclosure, the mixing apparatus for use herein is selected from the group consisting of single screw extruders, twin screw extruders, planetary roller extruders, ring extruders, and any combinations thereof.

According to an even more advantageous aspect of the disclosure, the mixing apparatus for use herein is selected from the group consisting of co-rotating multi-screw extruders, counter-rotating multi-screw extruders, and any combinations thereof.

According to one particularly advantageous aspect, the mixing apparatus for use herein is a twin-screw extruder, in particular a co-rotating twin-screw extruder.

According to another particularly advantageous aspect, the mixing apparatus for use herein is a planetary roller extruder comprising in particular a center spindle and multiple planetary gear spindles with center spindle and planetary gear spindles featuring a screw like geometry.

In one exemplary aspect of the disclosure, the optional step of subjecting the free-radical curable precursor of a pressure sensitive adhesive to a heating step is performed at a temperature in a range from 80°C to 300°C, from 90°C to 250°C, from 100°C to 200°C, from 100°C to 180°C, from 100°C to 160°C, from 110°C to 160°C, from 110°C to 150°C, or even from 120°C to 150°C.

In one particular aspect, the free-radical curable precursor of a pressure sensitive adhesive is optionally subjected to any of devolatilization steps, degassing steps, in particular using entrainers or vacuum, solvent concentration steps, solvent stripping-off steps, solvent recycling steps, steam distillation steps, solvent distillation steps, and any combinations thereof.

In one advantageous aspect, the free-radical curable precursor of a pressure sensitive adhesive for use herein is subjected to any of devolatilization steps or melt degassing steps, in particular using entrainers or vacuum, VOC scavengers, distillation steps, solvent distillation steps, and any combinations thereof.

According to a typical aspect, the step of removing the free-radical curable precursor of a pressure sensitive adhesive from the mixing apparatus comprises (hot melt) coating the free-radical curable precursor on a substrate.

According to another advantageous aspect, the free-radical curable precursor of a pressure sensitive adhesive for use herein is hot melt processable.

According to another advantageous aspect, the free-radical curable precursor of a pressure sensitive adhesive for use herein is substantially uncured (by free-radical).

According to another advantageous aspect, the free-radical curable precursor of a pressure sensitive adhesive for use herein has a weight-average molecular weight (M_{w}) no greater than 1.000.000 g/mol, no greater than 900.000 g/mol, no greater than 800.000 g/mol, no greater than 700.000 g/mol, no greater than 600.000 g/mol, or even no greater than 500.000 g/mol.

According to still another advantageous aspect, the free-radical curable precursor of a pressure sensitive adhesive for use herein has a weight-average molecular weight (M_{w}) comprised in a range from 10.000 to 1.000.000 g/mol, from 50.000 to 800.000 g/mol, from 100.000 to 600.000 g/mol, or even from 200.000 to 600.000 g/mol.

According to still another advantageous aspect, the free-radical curable precursor of a pressure sensitive adhesive for use herein has a Volatile Organic Compound (VOC) value of less than 1500 ppm, less than 1200 ppm, less than 1000 ppm, less than 800 ppm, less than 600 ppm, less than 500 ppm, less than 400 ppm, less than 300 ppm, less than 200 ppm, less than 150 ppm, less than 120 ppm, less than 100 ppm, less than 80 ppm, or even less than 60 ppm, when measured by thermal desorption analysis according to test method VDA278.

According to still another advantageous aspect, the free-radical curable precursor of a pressure sensitive adhesive for use herein has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, less than 400 ppm, less than 300 ppm, less than 200 ppm, less than 150 ppm, less than 120 ppm, or even less than 100 ppm, when measured by thermal desorption analysis according to test method VDA278.

In yet another advantageous aspect of the disclosure, the step of curing the free-radical curable precursor of a pressure sensitive adhesive is performed by a free-radical curing process, in particular an actinic radiation curing process, more in particular UV radiation, more in particular UV-C radiation.

In still another aspect, the present disclosure relates to a pressure sensitive adhesive which is obtained (or obtainable) by curing the precursor composition of a pressure sensitive adhesive as described above. Advantageously, the curing is performed in particular by a free-radical curing process, in particular an actinic radiation curing process, more in particular UV radiation, more in particular UV-C radiation.

In yet another aspect of the present disclosure, it is provided a cured pressure sensitive adhesive which is obtained (or obtainable) by a process as described above.

According to one advantageous aspect, the pressure sensitive adhesive according to the disclosure has a Volatile Organic Compound (VOC) value of less than 1500 ppm, less than 1200 ppm, less than 1000 ppm, less than 800 ppm, less than 600 ppm, less than 500 ppm, less than 400 ppm, less than 300 ppm, less than 200 ppm, less than 150 ppm, less than 120 ppm, less than 100 ppm, less than 80 ppm, or even less than 60 ppm, when measured by thermal desorption analysis according to test method VDA278.

According to another advantageous aspect, the pressure sensitive adhesive according to the disclosure has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, less than 400 ppm, less than 300 ppm, less than 200 ppm, less than 150 ppm, less than 120 ppm, or even less than 100 ppm, when measured by thermal desorption analysis according to test method VDA278.

According to still another advantageous aspect, the pressure sensitive adhesive of the present disclosure has a static shear strength value of more than 2000 min, more than 4000 min, more than 6000 min, more than 8000 min, or even more than 10000 min, when measured at 70°C according to the static shear test method described in the experimental section.

In still another aspect, the present disclosure relates to a pressure sensitive adhesive assembly comprising a first pressure sensitive adhesive layer, wherein the first pressure sensitive adhesive layer comprises a free-radical curable precursor of a pressure sensitive adhesive or a cured pressure sensitive adhesive as described above.

In a particular execution of the pressure sensitive adhesive assembly, the first pressure sensitive adhesive foam takes the form of a polymeric foam layer.

In the context of the present disclosure, the term "polymeric foam" is meant to designate a material based on a polymer and which material comprises voids, typically in an amount of at least 5% by volume, typically from 10% to 55% by volume or from 10% to 45% by volume. The voids may result from the incorporation of hollow fillers, such as hollow polymeric particles, hollow glass microspheres or hollow ceramic microspheres. Advantageously, the voids may result from the presence of the expandable microspheres.

A polymeric foam layer for use herein has for example a thickness comprised between 100 and 6000 micrometers, between 200 and 4000 micrometers, between 500 and 2000 micrometers, or even between 800 and 1500 micrometers. As will be apparent to those skilled in the art, in the light of the present description, the preferred thickness of the polymeric foam layer will be dependent on the intended application.

A polymeric foam layer typically has a density comprised between 0.30 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

In an alternative execution of the pressure sensitive adhesive assembly, the first pressure sensitive adhesive foam takes the form of a polymeric non-foamed layer.

In a particular aspect of the present disclosure, the pressure sensitive adhesive assembly further comprises a second pressure sensitive adhesive layer adjacent to the first pressure sensitive adhesive layer.

In a particular execution, the pressure sensitive adhesive assembly according to the present disclosure takes the form of skin/core type multilayer pressure sensitive adhesive assembly, wherein the first pressure sensitive adhesive (foam) layer is the core layer of the multilayer pressure sensitive adhesive assembly and the second pressure sensitive adhesive layer is the skin layer of the multilayer pressure sensitive adhesive assembly. This particular execution is commonly referred to as a dual layer polymeric foam tape assembly. According this specific execution, it is preferred that the second pressure sensitive adhesive layer has a lower thickness compared to the polymeric foam core layer. As a way of example, the thickness of the skin layer may typically be in the range from 20 micrometers to 250 micrometers, or even from 40 micrometers to 200 micrometers, whereas the thickness of the polymeric foam core layer may typically be in the range from 100 micrometers to 6000 micrometers, from 400 micrometers to 3000 micrometers, or even from 800 micrometers to 2000 micrometers. However, the thickness of the various layer(s) comprised in the pressure sensitive adhesive assembly may vary in wide ranges depending on the desired execution and associated properties. By way of example, the thickness can be independently chosen for each layer between 25 micrometers and 6000 micrometers, between 40 micrometers and 3000 micrometers, between 50 micrometers and 3000 micrometers, between 75 micrometers and 2000 micrometers, or even between 75 micrometers and 1500 micrometers.

Multilayer pressure sensitive adhesive assemblies according to the present disclosure, and in particular dual layer polymeric foam tape assemblies, are particularly advantageous when compared to single-layer pressure sensitive adhesives, in that adhesion (quick adhesion) can be adjusted by the formulation of the second pressure sensitive adhesive layer (also commonly referred to as the skin layer), while other properties/requirements of the overall assembly such as application issues, deforming issues and energy distribution may be addressed by appropriate formulation of the polymeric foam layer (also commonly referred to as the core layer).

In one particular aspects-, the multilayer pressure sensitive adhesive assembly as disclosed herein is smooth, homogenous and consists of layers which are chemically bond to each other, without any delamination occurring. Alternatively, the layers of the multilayer pressure sensitive adhesive assemblies may be adhered to each other by suitable physical surface treatments such as e.g. corona or plasma treatment or chemical surface treatment such as use of primer compositions. Those surface treatment techniques are well known to those skilled in the art.

In another particular execution, the pressure sensitive adhesive assembly according to the present disclosure takes the form of skin/core type multilayer pressure sensitive adhesive assembly, wherein the second pressure sensitive adhesive (foam) layer is the core layer of the multilayer pressure sensitive adhesive assembly and the first pressure sensitive adhesive layer is the skin layer of the multilayer pressure sensitive adhesive assembly.

In one particular aspect, it may be advantageous for the multilayer pressure sensitive adhesive assemblies of the present disclosure to further comprise a third pressure sensitive adhesive layer which is preferably adjacent to the first pressure sensitive adhesive layer in the side of the first pressure sensitive adhesive layer which is opposed to the side of the first pressure sensitive adhesive layer adjacent to the second pressure sensitive adhesive layer, and thereby forming a three-layered multilayer pressure sensitive adhesive assembly.

Three-layered multilayer pressure sensitive adhesive assemblies according to one aspect of the disclosure, may advantageously take the form of a skin/core/skin multilayer pressure sensitive adhesive assembly, wherein the first pressure sensitive adhesive layer is the core layer of the multilayer pressure sensitive adhesive assembly, the second pressure sensitive adhesive layer is the first skin layer of the multilayer pressure sensitive adhesive assembly and the third pressure sensitive adhesive layer is the second skin layer of the multilayer pressure sensitive adhesive assembly.

In another particular execution, the pressure sensitive adhesive assembly of the disclosure is in the form of a skin/core/skin multilayer pressure sensitive adhesive assembly, wherein the second pressure sensitive adhesive layer is the core layer of the multilayer pressure sensitive adhesive assembly, the first pressure sensitive adhesive layer is the first skin layer of the multilayer pressure sensitive adhesive assembly and the third pressure sensitive adhesive layer is the second skin layer of the multilayer pressure sensitive adhesive assembly.

The second pressure sensitive adhesive layer and/or the third pressure sensitive adhesive layer may have any composition commonly known in the art. As such, the composition of these various layers for use in the multilayer pressure sensitive adhesive assemblies of the present disclosure is not particularly limited.

In a particular aspect, the second pressure sensitive adhesive layer and/or the third pressure sensitive adhesive layer comprise a polymer base material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

In a typical aspect, the second pressure sensitive adhesive layer and/or the third pressure sensitive adhesive layer comprise a polymer base material selected from the group consisting of polyacrylates, polyurethanes, and any combinations, copolymers or mixtures thereof.

According to another typical aspect, the second pressure sensitive adhesive layer and/or the third pressure sensitive adhesive layer comprise a polymer base material selected from the group consisting of polyacrylates, and any combinations, copolymers or mixtures thereof.

According to a preferred aspect of the pressure sensitive adhesive assemblies of the present disclosure, the second pressure sensitive adhesive layer and/or the third pressure sensitive adhesive layer comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

The pressure sensitive adhesives and assemblies of the present disclosure can be coated/applied upon a variety of substrates to produce adhesive-coated articles. The substrates can be flexible or inflexible and be formed of a polymeric material, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polymethyl(meth)acrylate (PMMA), cellulose acetate, cellulose triacetate, and ethyl cellulose. Foam backings may be used. Examples of other substrates include, but are not limited to, metal such as stainless steel, metal or metal oxide coated polymeric material, metal or metal oxide coated glass, and the like.

The pressure sensitive adhesives and assemblies of the present disclosure may be used in any article conventionally known to use such assemblies such as labels, tapes, signs, covers, marking indices, display components, touch panels, and the like. Flexible backing materials having microreplicated surfaces are also contemplated.

The pressure sensitive adhesive adhesives and assemblies may be coated/applied on a substrate using any conventional coating techniques modified as appropriate to the particular substrate. For example, pressure sensitive adhesives and assemblies may be applied/coated to a variety of solid substrates by methods such as roller coating, flow coating, dip coating, spin coating, spray coating knife coating, and die coating. These various methods of coating allow the pressure sensitive adhesive adhesives and assemblies to be placed on the substrate at variable thicknesses thus allowing a wider range of use of the assemblies.

In still another aspect, the present invention relates to the use of a precursor composition of a pressure sensitive adhesive or a free-radical curable precursor of a pressure sensitive adhesive or a pressure sensitive adhesive or a pressure sensitive adhesive assembly as described above for industrial applications.

In yet another aspect, the present invention relates to the use of a precursor composition of a pressure sensitive adhesive or a free-radical curable precursor of a pressure sensitive adhesive or a pressure sensitive adhesive or a pressure sensitive adhesive assembly as described above for interior applications, in particular for construction market applications and transportation market applications, in particular automotive and aerospace applications, more in particular for taped seal on body, taped seal on door, exterior and interior parts attachment and weather-strip tape applications for the automotive industry.

In yet another aspect, the present invention relates to the use of a precursor composition of a pressure sensitive adhesive or a free-radical curable precursor of a pressure sensitive adhesive or a pressure sensitive adhesive or a pressure sensitive adhesive assembly as described above for electronic applications, in particular for the fixation of display panels in mobile hand held electronic devices.

In yet another aspect, the present invention relates to the use of a precursor composition of a pressure sensitive adhesive or a free-radical curable precursor of a pressure sensitive adhesive or a pressure sensitive adhesive or a pressure sensitive adhesive assembly as described above for the bonding to a low surface energy substrate and/or a medium surface energy substrate, in particular automotive clear coats/paints.

### EXAMPLES

The invention is further illustrated by the following examples. These examples are merely for illustrative purposes only and are not meant to be limiting on the scope of the appended claims.

### Test Methods applied:

### Static shear test at 70 °C with 500g (FINAT Test Method No. 8, 8th edition 2009)

The test is carried out at 70°C. The pressure sensitive adhesive film is laminated on a 50 |im thick PET backing (commercially available as Hostaphan RN50). Test specimens are cut out of the sample material having a dimension of 25 mm by 175 mm. The liner is then removed, and the adhesive strips are adhered onto stainless steel plates with an overlap of 25.4 mm x 25.4 mm. A loop is prepared at the end of the test strip in order to hold the specified weight. Next, the test samples are rolled down twice with a standard FINAT test roller (weight 2 kg) at a speed of approximately 10 mm per second to obtain intimate contact between the adhesive mass and the surface. After applying the pressure sensitive adhesive assembly strips to the test panel, the test samples are allowed to dwell for 24 hours at ambient room temperature (23°C +/- 2°C, 50% relative humidity +/-5%) prior to testing. Each sample is then placed into a vertical shear-stand (+2° disposition) at 70°C provided with automatic time logging. After 10 minutes dwell time in the oven, a 500g weight is hung into the loop. The time until failure is measured and recorded in minutes. Target value is 10.000 minutes. Two samples are measured for each construction. A recorded time of ">10000" indicates that the adhesive did not fail after 10000 min.

### Thermal desorption analysis of organic emissions according to VDA test method 278

VDA method 278 is a test method used for the determination of organic emissions from non-metallic trim components used to manufacture the interior of motor vehicles (VDA stands for "Verband der Automobilindustrie", the German Association of Automobilists). The method classifies the emitted organic compounds into two groups:
VOC value - the sum of volatile and semi-volatile compounds up to n-C₂₅ and
FOG value - the sum of the semi-volatile and heavy compounds from n-C₁₄ to n-C₃₂

For measuring the VOC and FOG values, adhesive samples of 30mg +/- 5mg are weighed directly into empty glass sample tubes. The volatile and semi-volatile organic compounds are extracted from the samples into the gas stream and are then re-focused onto a secondary trap prior to injection into a GC for analysis. An automated thermal desorber (Markes International Ultra-UNITY system) is hereby used for the VDA 278 testing.

The test method comprises two extraction stages:
- VOC analysis, which involves desorbing the sample at 90°C for 30 minutes to extract VOC's up to n-C₂₅. This is followed by a semi-quantitative analysis of each compound as µg toluene equivalents per gram of sample.
- FOG analysis, which involves desorbing the sample at 120°C for 60 minutes to extract semi-volatile compounds ranging from n-C₁₄ to n-C₃₂. This is followed by semi-quantitative analysis of each compound as µg hexadecane equivalents per gram of sample.

The VOC values expressed are the average of two measurements per sample. The higher value of the measurements is indicated as the result, as described in the VDA278 test method. In order to determine the FOG value, the second sample is retained in the desorption tube after the VOC analysis and reheated to 120 °C for 60 minutes.

### Raw materials used:

The raw materials and starting products used are summarized in Table 1 below.

**Table 1: Raw material list.**

| Name | Description | Supplier |
|---|---|---|
| **AcResin A250** | UV-curable acrylate copolymer having a weight-average molecular weight (M_{w}) of 250.000 g/mol. | BASF |
| **Pregon** | Propylene-glycol bisaziridino-functional oligomer having a weight-average molecular weight of about 6100 g/mol. | 3M ESPE GmbH, Germany |
| **Pregon CF** | Propylene-glycol bisaziridino-functional oligomer having a weight-average molecular weight of about 6000 g/mol. | 3M ESPE GmbH, Germany |
| **Picassian XL 725** | multi-functional carbodiimide oligomeric branching compound comprising an oligomer backbone and having a weight-average molecular weight (M_{w}) of 7000 g/mol. | Stahl, The Netherlands |

### Examples:

### General preparation of the pressure sensitive adhesives (Ex.1 to Ex.3) and comparative example (CE-1):

The exemplary pressure sensitive adhesives are prepared according to the following procedure:
The acrylate copolymer A250 and the specific multi-functional oligomeric branching compound are fed in the hopper of a twin-screw extruder at a temperature of 140°C under continuous mixing running at 200 rpm. After 4 minutes mixing time, the resulting adhesive mass is coated on a paper liner siliconized on both sides. The obtained pressure sensitive adhesive transfer tapes have a thickness of 100 micrometers and are then cured with UV-C light with an intensity of 70 mJ/cm². Comparative example CE-1 does not comprise any multi-functional oligomeric branching compound.

### Exemplary pressure sensitive adhesives (Ex.1 to Ex. 3) and comparative example (CE-1):

The exemplary pressure sensitive adhesive formulations are shown in Table 2, wherein all the amounts are expressed in parts.

**Table 2: Exemplary PSA formulations**

| Examples | Ex.1 | Ex.2 | Ex.3 | CE-1 |
|---|---|---|---|---|
| AcResin A250 | 100 | 100 | 100 | 100 |
| Pregon | 1.87 | - | - | - |
| Pregon CF | - | 1.87 | - | - |
| XL 725 | - | - | 1 | - |

### Test results:

### VOC and FOG measurements:

The samples are analyzed according to the VDA 278 test method described above. The results are shown in Table 3 below (in ppm).

**Table 3: VOC and FOG measurements**

| Examples | Ex.1 | Ex.2 | Ex.3 | CE-1 |
|---|---|---|---|---|
| VDA 278 VOC | 101 | 63 | 57 | 195 |
| VDA 278 FOG | 231 | 96 | 222 | 176 |

As can be seen from the results shown in Table 3, the pressure sensitive adhesives according to the present disclosure (Ex.1 to Ex.3) are provided with reduced overall VOC levels, when compared to using a PSA composition not comprising a multi-functional oligomeric branching compound (comparative example CE-1).

### Static shear adhesion performance:

The samples are analyzed according to the static shear adhesion test method described above. The results are shown in Table 4 below (in minutes).

**Table 4: Static shear adhesion performance**

| Examples | Ex.1 | Ex.2 | Ex.3 | CE-1 |
|---|---|---|---|---|
| Static shear strength | 10.000 | 10.000 | 10.000 | 1844 |

As can be seen from the results shown in Table 4, the pressure sensitive adhesives according to the present disclosure (Ex. 1 to Ex.3) are provided with excellent shear performance at elevated temperature, when compared to using a PSA composition not comprising a multi-functional oligomeric branching compound (comparative example CE-1).

## Claims

1. A precursor composition of a pressure sensitive adhesive comprising:
a) a (co)polymeric base component having a weight-average molecular weight (M_{w}) no greater than 500.000 g/mol and comprising at least one reactive functional group (X); and
b) a multi-functional oligomeric branching compound comprising an oligomer backbone and having a weight-average molecular weight (M_{w}) greater than 250 g/mol, wherein the multi-functional oligomeric branching compound comprises at least two complementary reactive functional groups (Y) which are capable of chemically reacting with the at least one reactive functional group (X) of the (co)polymeric base component.

2. A composition according to claim 1, which is curable, in particular free-radical curable, more in particular with the provision of radiation, more in particular UV radiation, e-beam radiation or gamma radiation, more in particular UV-C radiation.

3. A composition according to any of claim 1 or 2, wherein the at least one functional group (X) is selected from the group consisting of carboxylic acids, hydroxyls, amines, aziridines, azetidines, pyrrolidines, piperidines, carbodiimides, isocyanates, epoxides, acid anhydrides, amides, and any combinations or mixtures thereof.

4. A composition according to any of the preceding claims, wherein the complementary functional groups (Y) are selected from the group consisting of carboxylic acids, hydroxyls, amines, aziridines, azetidines, pyrrolidines, piperidines, carbodiimides, isocyanates, epoxides, acid anhydrides, amides, and any combinations or mixtures thereof.

5. A composition according to any of the preceding claims, wherein the (co)polymeric base component further comprises at least one free-radical curable functional group (Z), which is different from the at least one reactive functional group (X) and different from the complementary reactive functional groups (Y).

6. A composition according to any of the preceding claims, wherein the (co)polymeric base component has a weight-average molecular weight (M_{w}) no greater than 480.000 g/mol, no greater than 450.000 g/mol, no greater than 420.000 g/mol, no greater than 400.000 g/mol, no greater than 380.000 g/mol, no greater than 350.000 g/mol, no greater than 320.000 g/mol, no greater than 300.000 g/mol, no greater than 290.000 g/mol, no greater than 280.000 g/mol, no greater than 270.000 g/mol, no greater than 260.000 g/mol, or even no greater than 250.000 g/mol.

7. A composition according to any of the preceding claims, wherein the (co)polymeric base component has a weight-average molecular weight (M_{w}) comprised in a range from 6.000 to 480.000 g/mol, from 6.000 to 450.000 g/mol, from 6.000 to 420.000 g/mol, from 6.000 to 400.000 g/mol, from 6.000 to 380.000 g/mol, from 6.000 to 360.000 g/mol, from 6.000 to 340.000 g/mol, from 10.000 to 320.000 g/mol, from 30.000 to 300.000 g/mol, from 50.000 to 300.000 g/mol, from 80.000 to 300.000 g/mol, from 100.000 to 300.000 g/mol, from 100.000 to 300.000 g/mol, from 150.000 to 300.000 g/mol, from 200.000 to 300.000 g/mol, from 220.000 to 300.000 g/mol, from 220.000 to 280.000 g/mol, or even from 220.000 to 260.000 g/mol.

8. A composition according to any of the preceding claims, wherein the multi-functional oligomeric branching compound has a weight-average molecular weight (M_{w}) greater than 300 g/mol, greater than 350 g/mol, greater than 400 g/mol, greater than 450 g/mol, greater than 500 g/mol, greater than 550 g/mol, greater than 600 g/mol, greater than 650 g/mol, greater than 700 g/mol, greater than 800 g/mol, greater than 1000 g/mol, greater than 2000 g/mol, greater than 3000 g/mol, greater than 4000 g/mol, greater than 5000 g/mol, or even greater than 6000 g/mol.

9. A composition according to any of the preceding claims, wherein the multi-functional oligomeric branching compound comprises an oligomer backbone comprising in particular a polyether, a polyester or a polythioether.

10. A composition according to any of the preceding claims, wherein the multi-functional oligomeric branching compound comprises at least one cyclic amine, at each terminal position of the oligomer backbone.

11. A composition according to any of the preceding claims, wherein the multi-functional oligomeric branching compound comprises at least one carbodiimide, at each terminal position of the oligomer backbone.

12. A process of manufacturing a pressure sensitive adhesive, comprising the steps of:
a) providing a mixing apparatus comprising a reaction chamber;
b) providing a composition as described in any of the preceding claims;
c) incorporating and mixing the composition in the reaction chamber of the mixing apparatus thereby forming a free-radical curable precursor of a pressure sensitive adhesive;
d) optionally, subjecting the free-radical curable precursor of a pressure sensitive adhesive to a heating step;
e) optionally, subjecting the free-radical curable precursor of a pressure sensitive adhesive to a devolatilization step;
f) removing the free-radical curable precursor of a pressure sensitive adhesive from the mixing apparatus; and
g) curing the free-radical curable precursor of a pressure sensitive adhesive.

13. A cured pressure sensitive adhesive which is obtained by a process according to claim 11.

14. A pressure sensitive adhesive assembly comprising a first pressure sensitive adhesive layer, wherein the first pressure sensitive adhesive layer comprises a free-radical curable precursor of a pressure sensitive adhesive as defined in claim 11 or a cured pressure sensitive adhesive according to claim 12.

15. Use of a precursor composition of a pressure sensitive adhesive according to any of claims 1 to 10 or a free-radical curable precursor of a pressure sensitive adhesive as defined in claim 11 or a cured pressure sensitive adhesive according to claim 12 or a pressure sensitive adhesive assembly according to claim 13 for interior applications, in particular for construction market applications and transportation market applications, in particular automotive and aerospace applications, more in particular for taped seal on body, taped seal on door, exterior and interior parts attachment and weather-strip tape applications for the automotive industry.
